Europäisches Patentamt

(19) European Patent Office

Office européen des brevets

(11) Publication number: **0 028 648**

**B1**

(12) **EUROPEAN PATENT SPECIFICATION**

(45) Date of publication of patent specification: **27.07.83**

(51) Int. Cl.³: **C 01 G 39/00,**
**C 01 G 41/00**

(21) Application number: **80901189.3**

(22) Date of filing: **07.04.80**

(86) International application number:
**PCT/US80/00374**

(87) International publication number:
**WO 80/02554 27.11.80 Gazette 80/27**

(54) **METHOD FOR RECOVERING MOLYBDENUM FROM TUNGSTEN SOLUTIONS.**

(30) Priority: **14.05.79 US 38974**

(43) Date of publication of application:
**20.05.81 Bulletin 81/20**

(45) Publication of the grant of the patent:
**27.07.83 Bulletin 83/30**

(84) Designated Contracting States:
**AT CH DE FR GB LI LU NL SE**

(56) References cited:
**US - A - 3 158 438**
**US - A - 3 804 941**
**US - A - 3 806 580**
**US - A - 4 115 513**

(73) Proprietor: **GTE PRODUCTS CORPORATION**
**One Stamford Forum**
**Stamford, CT 06904 (US)**

(72) Inventor: **MacINNIS, Martin B.**
**5 Foster Road**
**Towanda, PA 18848 (US)**
Inventor: **KIM, Tai K.**
**R.D. 1**
**Towanda, PA 18848 (US)**

(74) Representative: **Bernhardt, Klaus (DE)**
**Reinländer & Bernhardt, Patentanwälte**
**Orthstrasse 12**
**D-8000 München 60 (DE)**

Courier Press, Leamington Spa, England

# 0 028 648

## Method for recovering molybdenum from tungsten solutions

The present invention relates to an improved process for removing molybdenum values from an aqueous solution containing tungsten and molybdenum.

### PRIOR ART

For processing tungsten ores it is desirable to remove molybdenum from an aqueous solution containing tungsten values.

According to a process disclosed in U.S. Patent US—A—3,158,438 to Kurtak a process is disclosed for recovering tungsten values from molybdenum contaminated aqueous solutions of tungsten. The molybdenum contaminate is precipitated as molybdenum trisulfide prior to the solvent extraction of tungsten. The molybdenum precipitate is formed by adding an alkali metal sulfide prior to the solvent extraction of tungsten. The molybdenum precipitate is formed by adding an alkali metal sulfide to the tungsten and molybdenum containing solution at a proper pH to convert the molybdenum contaminate to the thiomolybdate complex ion. Acidification of the resulting solution results in the precipitation of molybdenum trisulfide. Tungsten values are then extracted into an organic phase.

U.S. patent US—A—3,804,941 to Coad et al relates to a solvent extraction process for the recovery of tungsten. The solution containing tungsten values is sulfidized to convert all of the tungsten to the thiotungstate species. A resulting sulfidized alkaline solution is contacted with an extractant in an organic diluent to extract the tungsten. The amount of extractant employed is disclosed as being from about 1 to 15 percent by weight based on the organic phase with quaternary ammonium chloride being a preferred group of extractants. The extraction process as described is effective for removing relatively low concentrations of tungsten present as the tungstate ion from a brine not disclosed as containing molybdenum values.

U.S. patent US—A—3,806,580 discloses a process wherein tungsten in an alkaline solution is sulfidized to connect it to a thiotungstate species, contacted with an organic phase comprising an extractant in an organic diluent whereby the thiotungstate is extracted into the organic phase and subsequently recovered. The improvement comprises contacting the thiotungstate containing organic phase with sulfur dioxide whereby at least a portion of the thiotungstate is converted to a tungstate species. The tungstate species is stripped from the organic phase with an aqueous salt solution to recover the tungstate. The starting tungsten solution has a relatively low concentration of tungsten and is not disclosed as containing molybdenum values.

### SUMMARY OF THE INVENTION

Accordingly, it is an object of the present invention to remove molybdenum values from tungsten solutions.

According to the present invention, there is provided a process for removing molybdenum values from aqueous solutions containing tungsten values comprising sulfidizing said solution to an extent sufficient to convert substantially all of the molybdenum values to a thiomolybdate species, said sulfidizing being substantially less than the extent necessary to convert substantially all of said tungsten values to a thiotungstate species and contacting the resulting solution containing the thiomolybdate complex ion with a suitable amount of an organic extractant for a sufficient period of time to preferentially extract the thiomolybdate complex ion into the organic extractant, said organic extractant comprising an aromatic organic solvent and a quaternary ammonium compound of the formula $[R_3(CH_3)N]^+A^-$, wherein R is an alkyl group having from 8 to 10 carbon atoms and A is an anion derived from a mineral acid.

### DETAILED DESCRIPTION

The starting aqueous solution from which it is desired to concentrate the tungsten values and remove impurities includes molybdenum values. The solution may be formed from the ores scheelite or wolframite including ferberite and hubnerite or a concentrate thereof. The ore is ground and digested, such as with an alkaline solution, for a period of time sufficient to dissolve both molybdenum and tungsten. Typical prior art leaching methods employ sodium carbonate to leach out the tungsten values. The digestion of scheelite with soda is preferably conducted at an elevated temperature, say about 130°C for a period of time sufficient to digest the tungsten and molybdenum to form a solution containing sodium molybdate and sodium tungstate and an insoluble residue. The leach liquid typically has a pH in excess of 8 and comprises less than 5 grams per liter of sodium molybdate and from 50 to 200 grams per liter of sodium tungstate. Minor amounts of various other contaminants are present in the liquor. The present invention is primarily concerned with removing relatively dilute molybdate values from an aqueous solution containing relatively concentrated tungsten values.

The solution is sulfidized by adding sufficient alkali metal sulfide to the leach liquor to result in converting substantially all of the molybdenum values which are in the form of the molybdate ion to a thiomolybdate species. Preferably at least 200 percent of the amount of alkali metal sulfide stoichiometrically required to convert the molybdate ion to a thiomolybdate ion complex having the

2

formula $MoS_4^=$ is added. More preferably alkali metal sulfide is added in excess of about five times or 500 percent the stoichiometric amount. Excesses of greater than 10 ties can be used. Included within the term alkali metal sulfide are sodium sulfide, sodium acid sulfide. Hydrogen sulfide may also be used.

Sulfidizing should be carried out to an extent substantially less than the extent necessary to convert substantially all of the tungstate to a thiotungstate species. Preferably less than 300 percent of the stoichiometric amount of alkali metal sulfide required to convert the tungstate ion to a thiotungstate ion having the formula $W S_4^=$ is added. More preferably alkali metal sulfide is added in an amount less than the stoichiometric amount.

It is desirable to maximize the concentration of the thiomolybdate species and minimize the concentration of the thiotungstate species in the resulting solution since both species are extractable by the extractant utilized according to the present invention at a subsequent step.

As hereinbefore discussed the present invention is particularly effective when extracting molybdenum values from starting solutions having relatively dilute molybdenum values and containing relatively concentrated tungsten values. When tungsten is present in the starting solution as tungstate ions and molybdenum is present as molybdate ions, the molar ratio of tungstate to molybdate present in solution is preferably greater than 25 to 1. More preferably the molar ratio of tungstate to molybdate is greater than 40 to 1.

To effectively convert the molybdate ion ($MoO_4^=$) to the thiomolybdate complex ion which is represented by the formula $MoS_4^=$, the pH of the leach liquor should be greater than eight. The resulting solution containing the added alkali metal sulfide preferably has a pH of from 8.0 to 9.5 to obtain good extraction. The resultant solution more preferably has a pH from 8.4 to 8.6. The use of pH's greater than 10 result in a poor subsequent extraction. The use of lower pH's, on the order of 7.5, result in the formation of an undesirable emulsion.

Generally it is preferred to add the alkali metal sulfide to the leach liquor prior to making a pH adjustment. Satisfactory results may be achieved if the pH adjustment is made prior to the addition of alkali metal sulfide.

The resulting solution containing the thiomolybdate complex ion is contacted with a suitable amount of organic extractant for a sufficient period of time to preferentially extract the thiomolybdate complex ion into the organic extractant. The organic extractant comprises an aromatic organic solvent and an active extractant comprising a quarternary ammonium compound of the formula $[R_3(CH_3)N]^+A^-$, in which R is an alkyl group of from 8 to 10 carbon atoms and A is an anion, derived from mineral acids.

Particularly useful as an active extractant is tricaprylyl monomethyl ammonium chloride. Tricaprylyl monomethyl ammonium chloride is sold by General Mills Corporation under the name Aliquat 336. A in the foregoing formula is typically an anion derived from a mineral acid.

The organic solvent is preferably a mixture of alkyl benzenes having molecular weights of either 120, 134 or 148. Typical constituents include trimethyl benzene, dimethylethyl benzenes, methyl propyl benzene, tetramethyl benzene, diethyl toluene, dimethylisopropyl benzene and the like. The material is sold under the tradename SC #150 by Buffalo Solvents and Chemical Corporation. In the 1972 edition of *Organic Solvents*, a trade publication of Buffalo Solvents and Chemical Corporation, SC #150 is listed as having a boiling point range of from 183°C to 210°C, a Flash Point of 66°C (151°F) and specific gravity of 0.902 g/cm³. As previously stated the molecular weight of the alkyl benzenes contained in SC #150 are 120, 134 and 148. Thus the total carbon atoms in the alkyl chains attached to the benzene ring are either 3, 4 or 5.

When the organic solvent comprises a mixture of alkyl benzenes and the active extractant is a quaternary ammonium compound as hereinbefore discussed, the molybdenum values as compared to the tungsten values in the sulfidized solution are preferentially extracted. As the volume percent of active extractant is decreased based on a given total extractant volume, active extractant plus organic solvent, the amount of molybdenum and tungsten values extracted as a percentage of these species present in the sulfidized solution decreases.

Preferably an amount of active extractant as a volume percent of total extactant is utilized to result in greater than 90 percent of the molybdenum values and less than 5 percent of the tungsten values present in the sulfidized solution being extracted. Based on total volume of extractant, it is preferable to use less than 3% by volume active extractant to extract a high percentage of molybdenum values and a low percentage of tungsten values from the sulfidized solution. To reduce the tungsten values extracted, it is more preferred to use less than 2% and more preferred to use less than 1% by volume active extractant.

If it is desirable to extract substantially all of the molybdenum values it may be desirable to use greater than 3% by volume active extractant. Generally the use of active extractant volumes in excess of 5% results in greater than 99% removal of molybdenum values accompanied by the removal of greater than 10% of the tungsten values.

The ratio of organic extractant to aqueous solution being extracted can be varied within practical limits. Either a batch or continuous process can be utilized. Generally the organic to aqueous volumetric ratios can vary from 1 to 10 to 10 to 1.

The organic extractant containing the thiomolybdate complex is separated from the aqueous solution containing tungsten values by permitting a phase separation due to the differences in densities between the aqueous and organic liquids. The aqueous solution containing tungsten may be further processed according to conventional methods to recover sodium tungstate. Typical methods are evaporation to produce crystalline sodium tungstate or treatment with calcium to precipitate calcium tungstate therefrom.

The organic phase comprising the organic extractant which includes molybdenum values in the form of the thiomolybdate complex ion is contacted with an aqueous solution containing a sufficient amount of oxidizing agent to oxidize the thiomolybdate complex to the molybdate ion. The molybdenum values are transferred from the organic extractant to the aqueous phase in the form of the molybdate ion. Typical oxidizing agents are nitric acid, hydrogen peroxide, and metallic salt of hypochlorous acid.

The organic extractant with the molybdenum values removed is then recycled for contacting with the solution containing the thiomolybdate complex ion.

To more fully illustrate the invention, the following example is given. All parts, proportions and percentages are by volume unless otherwise indicated.

Example 1

A solution containing 184 grams of sodium tungstate per liter and 1.7 grams of sodium molybdate per liter was prepared. The pH was adjusted to 9.5 by the addition of sodium hydroxide and sodium hydrogen sulfide was added. The appropriate amount of sodium hydrogen sulfide solution was added to each of five one liter samples of the sodium tungstate and molybdate solution to give resulting solutions containing the moles per liter of sodium hydrogen sulfide set forth in column one, of Table I. Each solution was adjusted from a pH of 8.4—8.6 by slowly adding sulfuric acid. An organic extractant comprising 2.3 percent by volume Aliquat 336 and 97.7 percent by volume SC #150 was prepared. Separate 50 ml. portions of the organic extractant were each mechanically shaken in a 125 milliliter separator funnel for about 10 minutes with 50 ml. samples of the solutions of column one, Table I. After settling, equal volume of the organic and aqueous phases were analyzed for tungsten and molybdenum content. The following Table I shows the results when various concentrations of sodium hydrogen sulfide solution is utilized.

The Distribution Ratio is the concentration of the particular material in the organic phase divided by its concentration in the aqueous phase.

TABLE I

| NASH mole/liter | Distribution Ratio of Molybdenum $D_{Mo}$ | Distribution Ratio of Tungsten $D_W$ | Separation Factor $D_{Mo}/D_W$ |
|---|---|---|---|
| 0.11 | 5.69 | 0.033 | 172 |
| 0.22 | 35.71 | 0.032 | 1116 |
| 0.45 | 170.92 | 0.034 | 5027 |
| 0.67 | 194.77 | 0.036 | 5410 |
| 0.89 | 168.11 | 0.035 | 4803 |

Example 2

A solution containing 58 grams of sodium tungstate per liter and 0.8 grams of sodium molybdate per liter was prepared. The pH was adjusted to about 9 by the addition of sodium hydroxide. About 7 grams of sodium hydrosulfide (NaSH.2H$_2$O) which corresponds to about 5 times the stoichiometric amount was added. The pH of the solution was adjusted to about 8.5. Separate 50 ml. portions of the sulfidized solution were extracted with an organic extractant containing the percentage of active Aliquat 336 extractant shown in Table II which is a volume percent of the total extractant including SC #150. The samples were shaken, settled, and the organic phase analyzed for tungsten and molybdenum content. The following Table II shows the percent of the total molybdenum and tungsten values present in the sulfidized solution extracted with various percent Aliquat 336 extractants.

# 0 028 648

TABLE II

| % by Volume Aliquat | % of Molybdenum Values Extracted | % of Tungsten Values Extracted |
|---|---|---|
| 1% | 91.7 | 0.66 |
| 2% | 95.8 | 3.58 |
| 3% | 98.8 | 7.3 |
| 4% | 99.1 | 9.23 |
| 5% | 99.73 | 12.08 |
| 6% | 99.72 | 14.33 |
| 7% | 99.81 | 15.63 |
| 8% | 99.75 | 17.64 |
| 10% | 99.84 | 19.48 |

While there has been shown and described what are considered the preferred embodiments of the present invention, it will be obvious to those skilled in the art that various changes and modifications may be made therein without departing from the scope of the invention as described in the appended claims.

INDUSTRIAL APPLICABILITY

The present invention is useful industrially when processing tungsten ores to remove molybdenum from an aqueous solution containing tungsten values.

**Claims**

1. A process for removing molybdenum values from an aqueous solution containing tungsten values sulfidizing said solution to an extent sufficient to convert substantially all of the molybdenum values to a thiomolybdate species, said sulfidizing being substantially less than the extent necessary to convert substantially all of said tungsten values to a thiotungstate species, and contacting the resulting solution containing molybdate complex ion with a suitable amount or organic extractant for a sufficient period of time to preferentially extract the thiomolybdate into the organic extractant, said organic extractant comprising an aromatic organic solvent and a quaternary ammonium compound of the formula $[R_3(CH_3)N]^+A^-$, wherein R is an alkyl group having from 8 to 10 carbon atoms and A is anion derived from a mineral acid.

2. A process for removing molybdenum values from an aqueous solution containing tungsten according to Claim 1 wherein the pH of said resulting solution is from 8 to 10 during said extraction.

3. A process for removing molybdenum values from an aqueous solution according to Claim 2 containing tungsten wherein said resulting solution has a pH from 8 to 9.5.

4. A process for removing molybdenum values from an aqueous solution according to Claim 3 wherein said organic extractant containing the thiomolybdate complex is separated from the aqueous solution containing tungsten values.

5. A process for removing molybdenum values from an aqueous solution according to Claim 4 wherein the molar ratio of tungsten values to molybdenum values present in the aqueous solution is greater than 25 to 1.

6. A process for removing molybdenum values from an aqueous solution according to Claim 5 wherein said solution is sulfidized by adding at least 200 percent of the stoichiometric amount of alkali metal sulfide required to convert the molybdate to a thiomolybdate ion having the formula $Mo\,S_4^=$.

7. A process for removing molybdenum values from an aqueous solution according to Claim 6 wherein less than 300 percent of the stoichiometric amount of alkali metal sulfide required to convert the tungstate to a thiotungstate ion having the formula $W\,S_4^=$ is added.

8. A process for removing molybdenum values from an aqueous solution according to Claim 7 wherein said aqueous solution comprises less than 5 grams per liter of sodium molybdate and from 50 to 200 grams per liter of sodium tungstate.

5

9. A process for removing molybdenum values from an aqueous solution according to Claim 4 wherein the amount of quaternary ammonium compound as a volume percent of total extractant utilized results in greater than 90 percent of the molybdenum values and less than 5 percent of the tungsten values present in the resulting solution being extracted.

10. A process for removing molybdenum values from an aqueous solution according to Claim 9 wherein the extractant comprises less than 3 percent by volume quaternary ammonium based on total volume of extractant.

**Revendications**

1. Procédé pour enlever du molybdène d'une solution aqueuse contenant du tungstène, par sulfurisation de la dite solution en quantité suffisante pour convertir pratiquement tout le molybdène en une variété de thiomolybdate, la dite sulfurisation étant sensiblement inférieure à ce qui est nécessaire pour convertir pratiquement tout le dit tungstène en une variété de thiotungstate, et mise en contact de la solution résultante contenant un ion complexe molybdate avec une quantité appropriée d'une substance organique d'extraction pendant un temps suffisant pour extraire préférentiellement le thiomolybdate de la substance organique d'extraction, la dite substance organique d'extraction comprenant un solvant organique aromatique et un composé d'ammonium quaternaire de formule $[R_3(CH_3)N]^+A^-$, dans laquelle R est un groupe alkyle ayant entre 8 et 10 atomes de carbone et A est un anion dérivé d'un acide minéral.

2. Procédé pour enlever du molybdène d'une solution aqueuse contenant du tungstène selon la revendication 1, caractérisé en ce que le pH de la dite solution résultante est compris entre 8 et 10 pendant l'extraction.

3. Procédé pour enlever du molybdène d'une solution aqueuse contenant du tungstène selon la revendication 2, caractérisé en ce que la dite solution résultante présente un pH compris entre 8 et 9,5.

4. Procédé pour enlever du molybdène d'une solution aqueuse selon la revendication 3, caractérisé en ce que la dite substance organique d'extraction contenant l'ion complexe thiomolybdate est séparée de la solution aqueuse contenant du tungstène.

5. Procédé pour enlever du molybdène d'une solution aqueuse selon la revendication 4, caractérisé en ce que le rapport molaire du tungstène au molybdène présents dans la solution aqueuse est supérieur à 25 à 1.

6. Procédé pour enlever du molybdène d'une solution aqueuse selon la revendication 5, caractérisé en ce que la dite solution est sulfurisée par addition d'au moins 200% de la quantité stœchiométrique de sulfure de métal alcalin nécessaire pour transformer le molybdate en un ion thiomolybdate de formule $MoS_4^{--}$.

7. Procédé pour enlever du molybdène d'une solution aqueuse selon la revendication 6, caractérisé en ce que l'on ajoute moins de 300% de la quantité stœchiométrique de sulfure de métal alcalin nécessaire pour transformer le tungstate en un ion thiotungstate de formule $WS_4^{--}$.

8. Procédé pour enlever du molybdène d'une solution aqueuse selon la revendication 7, caractérisé en ce que la dite solution aqueuse comprend moins de 5 grammes par litre de molybdate de soude et entre 50 et 200 grammes par litre de tungstate de soude.

9. Procédé pour enlever du molybdène d'une solution aqueuse selon la revendication 4, caractérisé en ce que la quantité du composé d'ammonium quaternaire en tant que pourcentage en volume de la substance d'extraction utilisée entraine l'extraction de plus de 90% du molybdène et de moins de 5% du tungstène présents dans la solution résultante.

10. Procédé pour enlever du molybdène d'une solution aqueuse selon la revendication 9 caractérisé en ce que la substance d'extraction comprend moins de 3% en volume d'ammonium quaternaire par rapport au volume total de la substance d'extraction.

**Patentansprüche**

1. Verfahren zum Entfernen von Molybdänwerten aus einer Wolframwerte enthaltenden wässrigen Lösung, dadurch gekennzeichnet, daß die Lösung in einem Ausmaß sulfidiert wird, welches ausreicht, um im wesentlichen alle Molybdänwerte in eine Thiomolybdatart umzuwandeln, wobei das Sulfidieren bedeutend geringer ist als das zum Umwandeln im wesentlichen aller Wolframwerte in eine Thiowolframart nötige Ausmaß, und daß die entstehende, Molybdatkomplexion enthaltende Lösung mit einer geeigneten Menge eines organischen Extraktionsmittels ausreichend lange kontaktiert wird, um vorzugsweise das Thiomolybdat in das organische Extraktionsmittel zu extrahieren, wobei das organische Extraktionsmittel ein aromatisches organisches Lösungsmittel und eine quaternäre Ammoniumverbindung der Formel $[R_3(CH_3)N]^+A^-$ aufweist, worin R=eine Alkylgruppe mit von 8 bis 10 Kohlenstoffatomen und A=ein von einer Mineralsäure abgeleitetes Anion.

2. Verfahren zum Entfernen von Molybdänwerten aus einer wässrigen, Wolfram enthaltenden Lösung nach Anspruch 1, dadurch gekennzeichnet, daß der pH-Wert der entstehenden Lösung von 8 bis 10 während der Extraktion ist.

3. Verfahren zum Entfernen von Molybdänwerten aus einer wässrigen Lösung nach Anspruch 2, die Wolfram enthält, dadurch gekennzeichnet, daß die entstehende Lösung einen pH-Wert von 8 bis 9,5 hat.

4. Verfahren zum Entfernen von Molybdänwerten aus einer wässrigen Lösung nach Anspruch 3, dadurch gekennzeichnet, daß das organische Extraktionsmittel, welches den Thiomolybdatkomplex enthält, von der Wolframwerte enthaltenden wässrigen Lösung getrennt wird.

5. Verfahren zum Entfernen von Molybdänwerten aus einer wässrigen Lösung nach Anspruch 4, dadurch gekennzeichnet, daß das Molverhältnis der Wolframwerte zu den Molybdänwerten, die in der wässrigen Lösung vorhanden sind, größer ist als 25:1.

6. Verfahren zum Entfernen von Molybdänwerten aus einer wässrigen Lösung nach Anspruch 5, dadurch gekennzeichnet, daß die Lösung durch Zusatz von mindestens 200% der stöchiometrischen Menge an Alkalimetallsulfid, die zum Umwandeln des Molybdats in ein Thiomolybdation der Formel $MoS_4^=$ nötig ist, sulfidiert wird.

7. Verfahren zum Entfernen von Molybdänwerten aus einer wässrigen Lösung nach Anspruch 6, dadurch gekennzeichnet, daß weniger als 300% der zum Umwandeln des Wolframats in ein Thiowolframation der Formel $WS_4^=$ nötigen stöchiometrischen Menge zugesetzt wird.

8. Verfahren zum Entfernen von Molybdänwerten aus einer wässrigen Lösung nach Anspruch 7, dadurch gekennzeichnet, daß die wässrige Lösung weniger als 5 g pro Liter Natriummolybdat und von 50 bis 200 g pro Liter Natriumwolframat aufweist.

9. Verfahren zum Entfernen von Molybdänwerten aus einer wässrigen Lösung nach Anspruch 4, dadurch gekennzeichnet, daß die Menge der quaternären Ammoniumverbindung als Volumenprozent des benutzten Gesamtextraktionsmittels dazu führt, daß mehr als 90% der Molybdänwerte und weniger als 5% der Wolframwerte, die in der entstehenden Lösung vorhanden sind, extrahiert wird.

10. Verfahren zum Entfernen von Molybdänwerten aus einer wässrigen Lösung nach Anspruch 9, dadurch gekennzeichnet, daß das Extraktionsmittel weniger als 3 Vol.% an quaternärem Ammonium, ausgehend vom Gesamtvolumen des Extraktionsmittels, aufweist.